# EUROPEAN PATENT APPLICATION

(11) **EP 4 756 415 A1**
(43) Date of publication of application: **10.06.2026**
(21) Application number: 24861358.0
(22) Date of filing: 23.08.2024
(51) Int. Cl.: G01N 21/95, G01N 21/84, G02B 23/24, G02B 23/26

(54) **GLOVE INSPECTION DEVICE, GLOVE INSPECTION UNIT HAVING SAME, AND GLOVE INSPECTION METHOD USING SAME**

(30) Priority: 06.09.2023 JP 2023144616
(71) Applicant: Skan Japan Co., Ltd., Uruma-shi, Okinawa 904-2311 (JP)
(72) Inventor: USHIODA, Koji, Uruma-shi Okinawa 904-2311 (JP); GUSHI, Norifumi, Uruma-shi Okinawa 904-2311 (JP)
(74) Representative: Müller-Boré & Partner Patentanwälte PartG mbB
(86) International application number: PCT/JP2024/030043
(87) International publication number: WO 2025/052963

(57) **Abstract**

Provided are: a glove inspection device including a light guide rod that can be inserted into a finger portion of a glove, and a case provided with a support portion that supports a side, on which a first end portion of the light guide rod is located, opposite to an insertion direction of the light guide rod into the finger portion, and a light source configured to irradiate the first end portion; a glove inspection unit including the glove inspection device; and a glove inspection method using the glove inspection device.

## Description

### TECHNICAL FIELD

The present invention relates to a glove inspection device, a glove inspection unit having the same, and a glove inspection method using the same.

### BACKGROUND ART

In order to suppress contamination of a critical area due to operator intervention into the critical area during work such as aseptic manipulation and cell culture, it is known that restricted-access barrier systems such as an isolator and a clean bench are used. In general, an operator wears rubber gloves and intervenes in the critical area through these gloves in the restricted-access barrier system.

Damage such as holes or tears in a glove used in the restricted-access barrier systems may cause contamination. Thus, gloves that are used in the restricted-access barrier system are periodically inspected for damage. In particular, gloves that are used in an isolator, which is a closed-type restricted-access barrier system, and that are used in operations involving sterile preparations, toxic substances, radioactive material, or the like, must be rigorously inspected for damage.

As inspection for damage to a glove that is used in the restricted-access barrier system, a method including supplying air into the glove and checking for air leakage from any damaged areas is known. However, in this method, the air pressure of the supplied air may not apply sufficiently to the finger portions of the glove, and damage to the finger portions may be overlooked. Thus, in order to ensure inspection accuracy, the inspector needs to visually inspect the finger portions of the glove separately. In addition, since rubber gloves have elasticity, damaged areas such as holes or tears may contract. Due to the contraction of a damaged area as described above, small damage may be overlooked through mere surface observation. Therefore, the inspector stretches the inspection target area of the glove and performs visual inspection for damage.

PATENT LITERATURE 1 discloses a bag inspection device for rubber gloves or the like that includes a supply means for supplying gas into a bag body to inflate the bag body and an illumination means for illuminating the bag from the inside. PATENT LITERATURE 1 states that, in the bag inspection device disclosed in PATENT LITERATURE 1, since the bag is illuminated from the inside while the bag is inflated, even an unskilled operator can easily detect pinholes and locally thinned areas on the basis of the state of the light emitted through the bag, and the heat generated when a bulb serving as the illumination means emits light can be cooled by supplied air.

### CITATION LIST

PATENT LITERATURE 1: Japanese Laid-Open Patent Publication No. 2011-17579

### SUMMARY OF THE INVENTION

A glove inspection device according to an aspect of the present disclosure includes
a light guide rod that can be inserted into a finger portion of a glove, and
a case provided with a support portion that supports a side, on which a first end portion of the light guide rod is located, opposite to an insertion direction of the light guide rod into the finger portion, and a light source configured to irradiate the first end portion.

A glove inspection unit according to another aspect of the present disclosure includes
the glove inspection device according to the above-described aspect of the present disclosure, and
a charging device configured to charge the glove inspection device.

A glove inspection method according to another aspect of the present disclosure includes
a lighting step of activating a light source of the glove inspection device according to the above-described aspect of the present disclosure,
an insertion step of inserting the glove inspection device into a glove, and
an inspection step of inspecting the glove for light leakage from any damaged areas.

### BRIEF DESCRIPTION OF DRAWINGS

[FIG. 1] FIG. 1 is a perspective view of a glove inspection device according to a first embodiment.
[FIG. 2] FIG. 2 is an exploded schematic view of the glove inspection device shown in FIG. 1.
[FIG. 3] FIG. 3 is a diagram illustrating a state where the glove inspection device is inserted into a glove in a glove inspection method using the glove inspection device according to the first embodiment.
[FIG. 4] FIG. 4 is a diagram illustrating a state where a finger portion of the glove undergoes visual inspection in the glove inspection method using the glove inspection device according to the first embodiment.
[FIG. 5] FIG. 5 is a diagram illustrating a state where an arm portion of the glove undergoes visual inspection in the glove inspection method using the glove inspection device according to the first embodiment.
[FIG. 6] FIG. 6 is a perspective view of a glove inspection device according to a second embodiment.
[FIG. 7] FIG. 7 is an exploded schematic view of the glove inspection device shown in FIG. 6.
[FIG. 8] FIG. 8 is a diagram illustrating a state where the glove inspection device is inserted into a glove in a glove inspection method using the glove inspection device according to the second embodiment.
[FIG. 9] FIG. 9 is a schematic view showing a state where the glove inspection device according to the second embodiment has been inserted in the glove.
[FIG. 10] FIG. 10 is a schematic view of a glove inspection unit according to a third embodiment.
[FIG. 11] FIG. 11 shows schematic views of a glove inspection device shown in FIG. 10.
[FIG. 12] FIG. 12 is a schematic view of a charging device shown in FIG. 10.
[FIG. 13] FIG. 13 is a diagram illustrating an operation of the glove inspection device via an input unit.

### DETAILED DESCRIPTION

### <Problems to be solved by the invention of the present disclosure>

The above-described glove visual inspection requires a large number of work steps, and imposes a heavy burden on an inspector. In addition, since the inspector needs to be skilled, it is necessary to incur significant training costs in order to ensure high inspection accuracy.

In the manufacture of sterile preparations, campaign production using a closed-type restricted-access barrier system may be conducted to enhance productivity. For example, in the campaign production of sterile preparations using an isolator, multiple lots are produced at once by using gloves set in the isolator.

It is difficult to apply the above-described conventional inspection method for supplying air into the glove, to the gloves set in the isolator. Furthermore, even if air can be supplied into the gloves set in the isolator, increasing the air pressure outside a critical area above that inside the critical area may cause serious contamination. Thus, at present, the gloves cannot be sufficiently inspected for damage during the campaign production of sterile preparations. If any damage is detected in the glove during inspection for damage to gloves after the campaign production of sterile preparations, all lots manufactured during the campaign production are discarded. Therefore, the development of a glove inspection device and a glove inspection method that achieve flexible operation of visual inspection of gloves, have been desired.

In the bag inspection device disclosed in PATENT LITERATURE 1, a light source is placed inside the glove at a palm portion, and the inflated glove is illuminated from the inside. In this case, sufficient light does not reach the finger portions of the glove, and there is a risk that damage to the finger portions is overlooked. In addition, if the light source is inserted directly into a finger portion of the glove, the finger portion of the glove is expected to overheat, thereby potentially causing the finger portion of the glove to undergo defects such as deformation or changes in properties.

The invention of the present disclosure has been made in view of such circumstances, and an object of the present invention is to provide a glove inspection device that reduces the burden on an inspector in visual inspection, achieves flexible operation of the visual inspection, and prevents finger portions of a glove from overheating due to the heat generated by a light source. Another object of the invention of the present disclosure is to provide a glove inspection unit including the glove inspection device. Still another object of the invention of the present disclosure is to provide a glove inspection method using the glove inspection device.

### <Advantageous effects of the present disclosure>

According to the present disclosure, the glove inspection device that reduces the burden on an inspector in visual inspection, achieves flexible operation of the visual inspection, and prevents the finger portions of the glove from overheating due to the heat generated by the light source, is provided. In addition, according to the invention of the present disclosure, the glove inspection unit including the glove inspection device is provided. Further, according to the invention of the present disclosure, the glove inspection method using the glove inspection device is provided.

### <Outlines of embodiments of the invention of the present disclosure>

Hereinafter, the outlines of embodiments of the invention of the present disclosure are listed and described.

(1) A glove inspection device of the present disclosure includes
   a light guide rod that can be inserted into a finger portion of a glove, and
   a case provided with a support portion that supports a side, on which a first end portion of the light guide rod is located, opposite to an insertion direction of the light guide rod into the finger portion, and a light source configured to irradiate the first end portion.
   According to the above (1), the glove inspection device reduces the burden on an inspector in visual inspection, achieves flexible operation of the visual inspection, and prevents the finger portion of the glove from overheating due to the heat generated by the light source.
(2) Preferably, the light guide rod includes a flange on the first end portion side, and
   the support portion includes a first engagement groove that engages with the flange.
   In the glove inspection device of the above (2), the light guide rod is stably fixed to the case. This stabilizes the light emission from the light guide rod, and makes it easier for the inspector to detect any damage to the glove. Thus, the burden on the inspector in visual inspection is reduced.
(3) Preferably, the light source is an LED chip including an LED element and a base board on which the LED element is mounted,
   the case includes a second engagement groove that engages with the base board, and
   the LED element is disposed near, but spaced from, the first end portion when the substrate is engaged.
   In the glove inspection device of the above (3), the LED chip is stably fixed to the case. This stabilizes the light emission from the light guide rod, and makes it easier for the inspector to detect any damage to the glove. Thus, the burden on the inspector in visual inspection is reduced. In addition, the light guide rod is prevented from heating due to the light source. Thus, the finger portion of the glove is further prevented from overheating.
(4) Preferably, a second end portion of the light guide rod, which faces the insertion direction of the light guide rod into the finger portion, is formed in a convex curved shape.
   In the glove inspection device of the above (4), light from the light guide rod is likely to be directed toward the tip of the finger portion of the glove. This makes it easier for the inspector to detect any damage to the finger portion of the glove. Thus, the burden on the inspector in visual inspection is further reduced.
(5) Preferably, the light guide rod has a length such that, when the light guide rod is inserted into the finger portion, the second end portion can pass a base of the finger portion of the glove to a position corresponding to 70% or more of a longitudinal length of the finger portion.
   In the glove inspection device of the above (5), light from the light guide rod is more likely to be directed toward the tip of the finger portion of the glove. This makes it easier for the inspector to detect any damage to the finger portion of the glove. Thus, the burden on the inspector in visual inspection is further reduced.
(6) Preferably, the light guide rod has a luminance of 1500 lux or more.
   In the glove inspection device of the above (6), the interior of the glove is irradiated with sufficient light from the light guide rod, thereby making it easier for the inspector to detect light leakage from any damaged areas of the glove. Thus, the burden on the inspector in visual inspection is further reduced.
(7) Preferably, the glove includes five said finger portions, and
   five said light guide rods that can be respectively inserted into the five finger portions, and a case provided with five support portions that support sides, on which support first end portions of the five light guide rods are located, opposite to insertion directions of the five light guide rods into the finger portions, and five light sources configured to respectively irradiate the first end portions of the five light guide rods, are provided.
   In the glove inspection device of the above (7), it is not necessary to reinsert the light guide rod into another finger portion in the visual inspection of the five finger portions of the glove. Thus, the burden on the inspector in visual inspection is further reduced.
(8) Preferably, the glove is a glove that is applied to a restricted-access barrier system.
(9) Preferably, the restricted-access barrier system is an isolator.
   The glove inspection device of the present disclosure is suitable for inspection for damage to gloves that are applied to the restricted-access barrier system, particularly, gloves for an isolator.
(10) Preferably, the case includes
   a control unit configured to control each light source and to switch the light emission mode of each light guide rod, and
   an input unit configured to instruct the control unit to switch the light emission mode, and
   the light emission mode includes
   an illumination mode in which the light guide rod is caused to continuously emit light, and
   a blinking mode in which the light guide rod is caused to intermittently emit light.
   In the glove inspection device of the above (10), the light emission mode of the light guide rod can be switched between the illumination mode and the blinking mode. This makes it easier for the inspector to detect any damage to the finger portion of the glove. Thus, the inspection accuracy of visual inspection is improved.
(11) Preferably, the case includes a notification unit configured to notify the light emission mode of the glove inspection device.
   In the glove inspection device of the above (10), the inspector can easily check the light emission mode of the light guide rod. This improves the efficiency of visual inspection work. Thus, the burden on the inspector in visual inspection is further reduced.
(12) A glove inspection unit of the present disclosure includes
   the glove inspection device according to any one of the above (1) to (11), and
   a charging device configured to charge the glove inspection device.
   In the glove inspection unit of the above (12), the replacement work for the battery in the glove inspection device when the battery runs out, and the limitation of the working range due to the length of the power cord, are eliminated. Thus, the burden on the inspector in visual inspection is further reduced.
(13) Preferably, the case includes a notification unit configured to notify a charging state of the glove inspection device, and
   the charging state includes
   a state in which the glove inspection device is charging, and
   a state in which a battery level of the glove inspection device is low.
   In the glove inspection unit of the above (13), the inspector can easily check the charging state of the glove inspection device. This prevents battery depletion in the glove inspection device from occurring during visual inspection. Thus, the burden on the inspector in visual inspection is further reduced.
(14) Preferably, the charging device
   includes an insertion port into which the case is inserted, and
   is configured to support the glove inspection device such that, when the case is inserted into the insertion port, a second end portion of the light guide rod, which faces an insertion direction of the light guide rod into the finger portion, faces a ceiling direction.
   In the glove inspection unit of the above (14), the glove inspection device is inserted into the insertion port, thereby enabling charging of the glove inspection device to be easily started. In addition, since the glove inspection device inserted into the insertion port is placed on the charging device in an upright position, the inspector can easily recognize the location where the glove inspection device is present. This improves the efficiency of visual inspection work. Thus, the burden on the inspector in visual inspection is further reduced.
(15) A glove inspection method of the present disclosure includes
   a lighting step of activating a light source of the glove inspection device according to any one of the above (1) to (11) or the glove inspection device used in the glove inspection unit according to any one of the above (12) to (14),
   an insertion step of inserting the glove inspection device into a glove, and
   an inspection step of inspecting light leakage from any damaged areas of the glove.
   In the glove inspection method of the above (15), the burden on an inspector in visual inspection is reduced, flexible operation of the visual inspection is achieved, and a finger portion of the glove is prevented from overheating due to heat generated by the light source.
(16) Preferably, the inspection step includes stretching of an inspection target area of the glove by the inspector.

With the glove inspection method of the above (16), the inspection accuracy of visual inspection is improved.

### <Details of embodiments of the invention of the present disclosure>

Hereinafter, preferred embodiments of the invention of the present disclosure will be described in detail with appropriate reference to the drawings.

### [Glove inspection device 100]

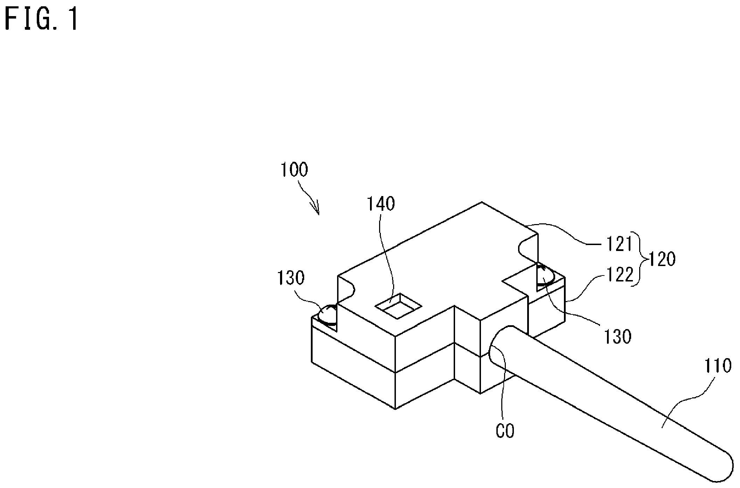

FIG. 1 is a perspective view of a glove inspection device 100 according to a first embodiment of the present disclosure. The glove inspection device 100 includes a light guide rod 110 and a case 120. The light guide rod 110 extends outward from the case 120 through a case opening CO of the case 120. The case 120 includes a first case member 121 and a second case member 122 fixed together with two screws 130. The case 120 is provided with a switch 140 for turning on and off the light emission of the light guide rod 110. In addition, the case 120 is provided with a power cord (not shown) for supplying power from an external power source to an LED chip 150 described below. Alternatively, the glove inspection device 100 may be configured to place a battery inside the case 120 and to supply power to the LED chip 150 from the battery.

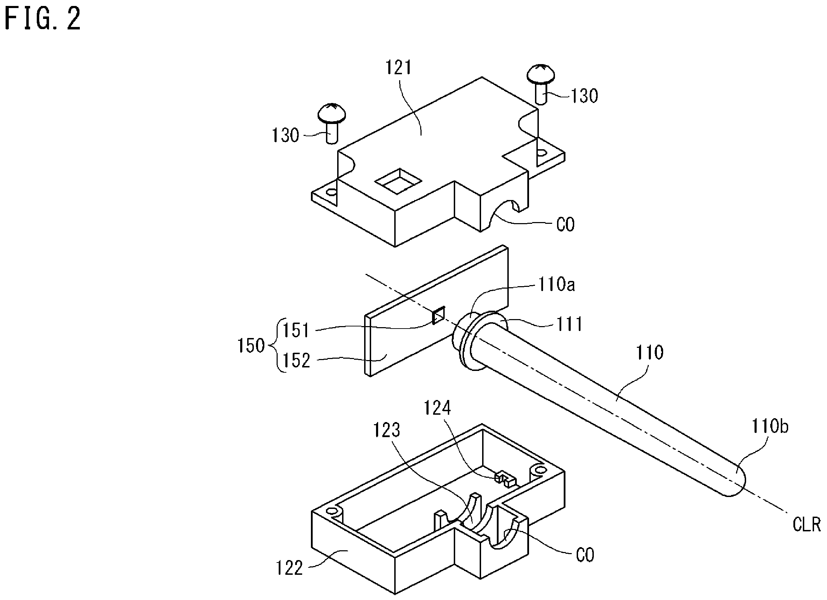

FIG. 2 is an exploded schematic view of the glove inspection device 100. An alternate long and short dash line shown in FIG. 2 indicates a center line CLR of the light guide rod 110. In the exploded schematic view shown in FIG. 2, the switch 140 and the configuration of the above-described power cord are omitted. As shown in FIG. 2, the LED chip 150, which serves as a light source for supplying light to the light guide rod 110, is incorporated in the case 120. The LED chip 150 includes an LED element 151, and a substrate 152 on which the LED element 151 is mounted.

The light guide rod 110 is formed of a substantially cylindrical rod-shaped light guide material. Examples of the light guide material include transparent resin materials such as acrylic-based resin, polycarbonate-based resin, and epoxy resin, and glass. In the light guide rod 110, acrylic-based resin is used as the light guide material. The light guide rod 110 is formed to taper from a first end portion 110a disposed on the LED chip 150 side toward a second end portion 110b, which is the end in an insertion direction of the light guide rod 110 into a finger portion 510 of a glove 500 described below. This makes it easier to insert the light guide rod 110 into the finger portion 510. In addition, the second end portion 110b is formed in a convex curved shape. Thus, light from the light guide rod 110 is more likely to be directed toward the tip of the finger portion 510 of the glove 500.

As shown in FIG. 2, the light guide rod 110 includes a flange 111 on the first end portion 110a side. The first case member 121 and the second case member 122 together form a support portion including a first engagement groove 123 for engagement with the flange 111. In a state where the flange 111 is engaged with the first engagement groove 123, the first case member 121 and the second case member 122 are fixed together with the screws 130, thereby stably fixing the light guide rod 110 to the case 120. Thus, the light emission from the light guide rod 110 is stabilized.

The first case member 121 and the second case member 122 together form a support portion including a second engagement groove 124 for engagement with the substrate 152 of the LED chip 150. The substrate 152 has a substantially rectangular flat plate shape. The second engagement groove 124 is formed across the first case member 121 and the second case member 122 so as to engage with the four corners of the substrate 152. In a state where the substrate 152 is engaged with the second engagement groove 124, the first case member 121 and the second case member 122 are fixed together with the screws 130, thereby stably fixing the LED chip 150 to the case 120. Thus, the light emission from the light guide rod 110 is stabilized.

The glove inspection device 100 is configured such that, in a state where the light guide rod 110 and the LED chip 150 are fixed to the case 120, the LED element 151 is disposed near, but spaced from, the first end portion 110a. More specifically, in the glove inspection device 100, the LED element 151 is disposed on the center line CLR on the first end portion 110a side at a distance of 0.5 mm or more and 5.0 mm or less from the first end portion 110a. When the LED element 151 is disposed at a distance of 0.5 mm or more from the first end portion 110a, the light guide rod 110 is prevented from overheating due to the heat generated by the LED chip 150. When the LED element 151 is disposed at a distance of 5.0 mm or less from the first end portion 110a, light from the LED element 151 is sufficiently supplied to the light guide rod 110.

The light guide rod 110 has a length such that, when inserted into the finger portion 510 of the glove 500 as described below, the light guide rod 110 can pass the base of the finger portion 510 of the glove 500 to a position corresponding to 70% or more of the longitudinal length of the finger portion 510. This enables the tip of the finger portion 510 to be sufficiently irradiated with the light from the light guide rod 110. Here, the light guide rod 110 has a length such that, when inserted, the light guide rod 110 can pass the base of the finger portion 510 to a position corresponding to 100% of the longitudinal length of the finger portion 510.

The glove inspection device 100 is configured such that the light guide rod 110 provides an illuminance of 1500 lux or more when emitting light. Thus, the interior of the glove 500 described below is irradiated with sufficient light from the light guide rod 110, which makes it easier to check for light leakage from any damaged areas of the glove 500 in visual inspection. The illuminance in units of lux of the light guide rod 110 is measured using a T-10a (manufactured by KONICA MINOLTA, INC.) as an illuminance meter at a distance of 40 mm or more and 60 mm or less from the end in the insertion direction into the finger portion of the glove, on the center line of the light guide rod.

### [Glove inspection method using glove inspection device 100]

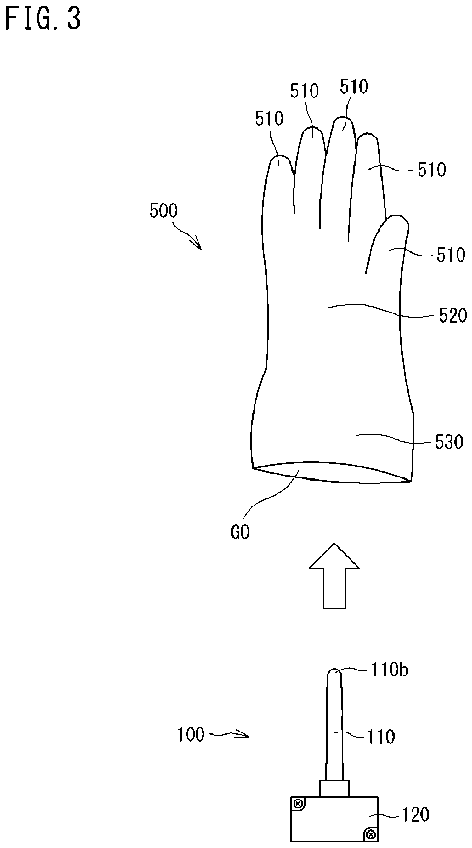

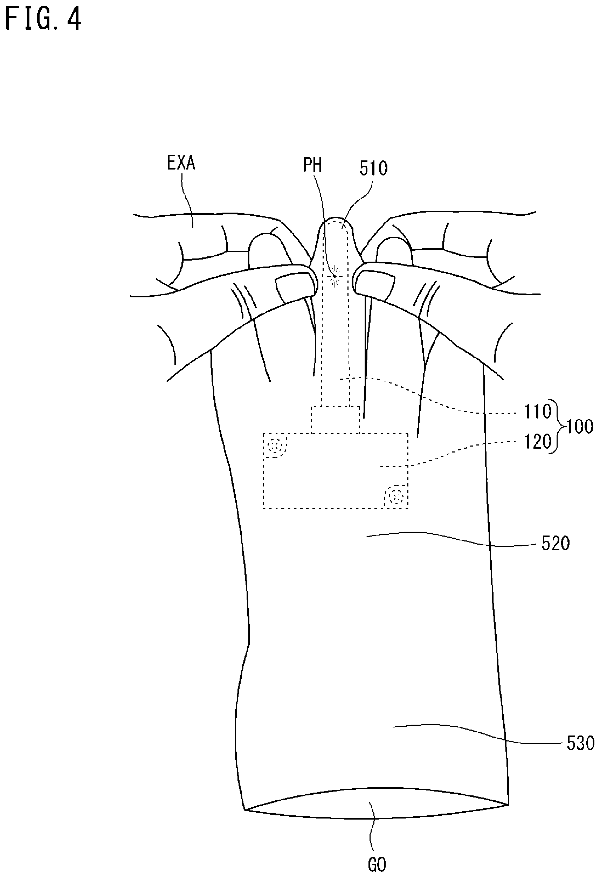

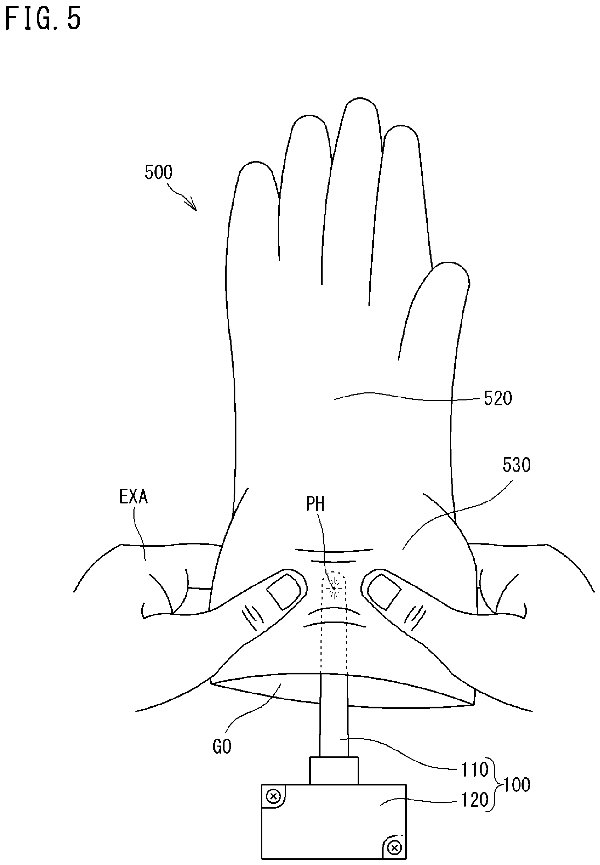

FIG. 3 is a diagram illustrating a state where the glove inspection device 100 is inserted into the glove 500 in a glove inspection method using the glove inspection device 100. FIG. 4 is a diagram illustrating a state where the finger portion 510 of the glove 500 undergoes visual inspection by the glove inspection device 100. FIG. 5 is a diagram illustrating a state where an arm portion 530 of the glove 500 undergoes visual inspection by the glove inspection device 100. The glove 500 is a rubber glove for an isolator and includes five finger portions 510, a palm portion 520, and the arm portion 530.

The glove inspection method using the glove inspection device 100 includes
step A: a lighting step of activating the light source of the glove inspection device 100,
step B: an insertion step of inserting the glove inspection device 100 into the glove 500, and
step C: an inspection step of inspecting the glove 500 for light leakage from any damaged areas thereof.

### (Step A and step B)

FIG. 3 shows a state where the glove inspection device 100, which is equipped with the light guide rod 110 turned on by the switch 140 to emit light, is inserted into the glove 500 through a glove opening GO. That is, FIG. 3 shows that the switch 140 of the glove inspection device 100 is turned on to illuminate the LED element 151 of the LED chip 150, thereby causing the light guide rod 110 to emit light (step A), and that the glove inspection device 100 equipped with the light-emitting light guide rod 110 is inserted into the glove 500 through the glove opening GO.

### (Step C)

FIG. 4 shows a state where the light-emitting light guide rod 110 of the glove inspection device 100 has been inserted into the finger portion 510 corresponding to the middle finger of the glove 500 and visual inspection is being performed. As shown in FIG. 4, in the visual inspection, an inspector EXA stretches an inspection target area of the glove 500 with fingers, and checks for damage such as holes or tears in the inspection target area. Since the glove 500 is made of rubber, damage cannot be detected by merely observing the surface of the inspection target area in some cases. Thus, step C preferably includes stretching of the inspection target area of the glove 500 by the inspector EXA. This improves the inspection accuracy of the glove inspection method using the glove inspection device 100.

In the glove inspection method using the glove inspection device 100, if damage is present in the inspection target area, light from the light guide rod 110 leaks out from the damaged area. The inspector EXA can check for the presence or absence of damage to the glove 500 by inspecting the glove 500 for light leakage. Therefore, the glove inspection method using the glove inspection device 100 makes it easier to detect damage compared to conventional visual inspection. FIG. 4 shows a state where light is leaking from a pinhole PH present in the finger portion 510 corresponding to the middle finger of the glove 500 in visual inspection.

FIG. 5 shows a state where the light-emitting light guide rod 110 of the glove inspection device 100 is placed in the glove 500 at a position near an inspection target area of the arm portion 530 and visual inspection is being performed. As shown in FIG. 5, in the same manner as the visual inspection of the finger portion 510 shown in FIG. 4, the inspector EXA stretches the inspection target area of the glove 500 with fingers, and checks for damage such as holes or tears in the inspection target area. In the glove inspection device 100, when the light-emitting light guide rod 110 is placed in the glove 500 at a position near the inspection target area, not only the finger portion 510 but also the palm portion 520 and the arm portion 530 can be visually inspected for any damaged areas. FIG. 5 shows a state where light is leaking from a pinhole PH present in the arm portion 530 of the glove 500 in visual inspection.

As described above, in the glove inspection method using the glove inspection device 100, an inspection is performed to check whether or not light is leaking from the glove inspection device 100 placed in the glove 500, i.e., from any damaged area of the glove 500, so that the presence or absence of damage to the glove 500 can be determined. Thus, the glove 500 can also be visually inspected during campaign production. Therefore, owing to the glove inspection device 100 and the glove inspection method using the glove inspection device 100, flexible operation of visual inspection is achieved.

### [Glove inspection device 200]

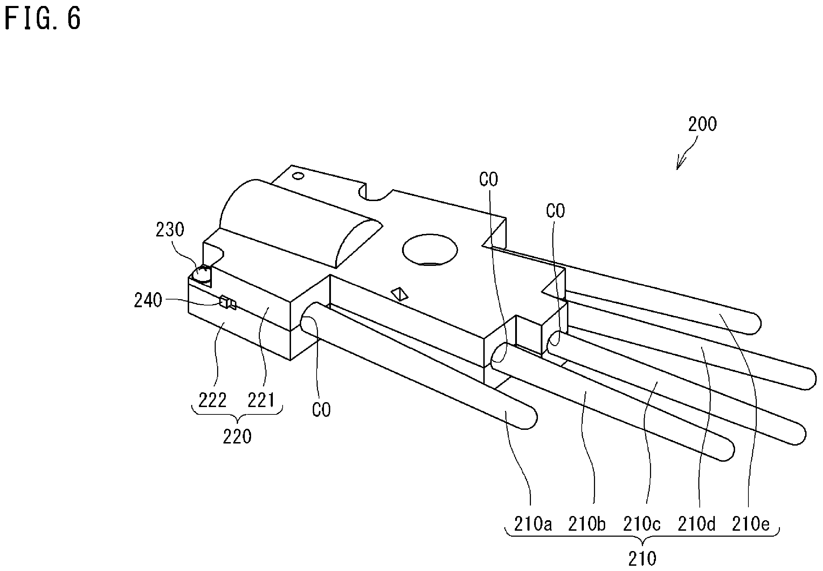

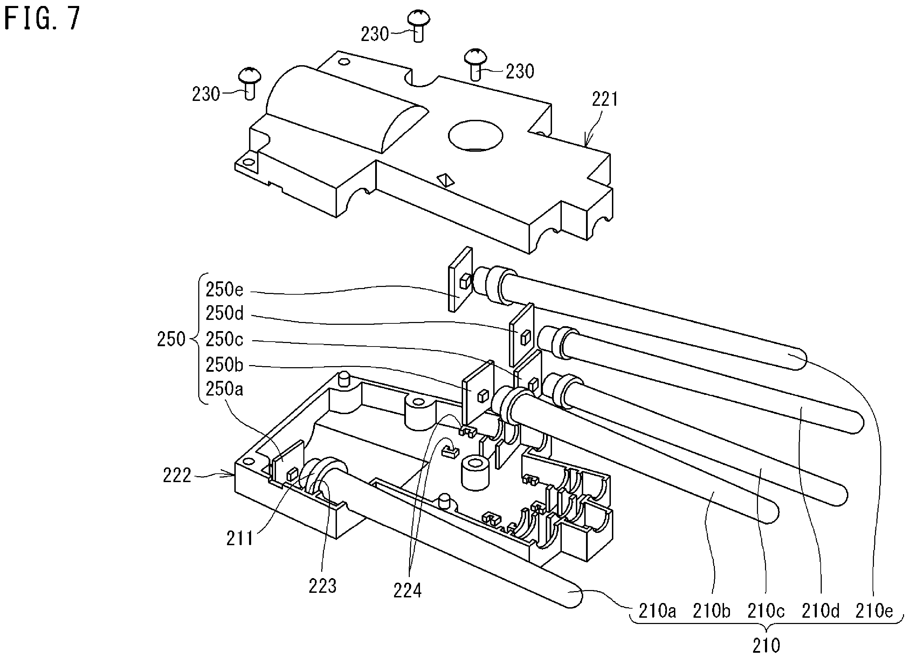

FIG. 6 is a perspective view of a glove inspection device 200 according to a second embodiment of the present disclosure. FIG. 7 is an exploded schematic view of the glove inspection device 200 shown in FIG. 6. The glove inspection device 200 includes light guide rods 210 and a case 220. While the glove inspection device 100 includes one light guide rod 110, the glove inspection device 200 includes five light guide rods 210 corresponding to the five fingers of the glove 500. Hereinafter, the descriptions of the components of the glove inspection device 200 that are the same as those of the glove inspection device 100 are omitted.

As described above, the glove inspection device 200 includes the five light guide rods 210 corresponding to five fingers. The light guide rods 210 each correspond to the light guide rod 110 of the glove inspection device 100. The five light guide rods 210 extend outward from the case 220 through five case openings CO formed in the case 220, respectively. The five light guide rods 210 corresponding to the five fingers include a light guide rod 210a to be inserted into the finger portion 510 corresponding to the thumb of the glove 500, a light guide rod 210b to be inserted into the finger portion 510 corresponding to the index finger of the glove 500, a light guide rod 210c to be inserted into the finger portion 510 corresponding to the middle finger of the glove 500, a light guide rod 210d to be inserted into the finger portion 510 corresponding to the ring finger of the glove 500, and a light guide rod 210e to be inserted into the finger portion 510 corresponding to the little finger of the glove 500.

The case 220 includes a first case member 221 and a second case member 222 fixed together with three screws 230. The case 220 corresponds to the case 120 of the glove inspection device 100. The first case member 221 and the second case member 222 respectively correspond to the first case member 121 and the second case member 122 of the glove inspection device 100. The screws 230 correspond to the screws 130 of the glove inspection device 100. The case 220 includes a switch 240 for turning on and off the light emission of the light guide rod 210. In addition, the case 220 includes therein a battery (not shown) for supplying power to LED chips 250. Similarly to the case 120, the case 220 may include a power cord for supplying power to the LED chips 250 from an external power source.

The LED chips 250 serving as light sources that supply light to the light guide rods 210 are incorporated in the case 220. The LED chips 250 each correspond to the LED chip 150 of the glove inspection device 100. The glove inspection device 200 is configured such that the five LED chips 250 supply light to the five light guide rods 210, respectively. That is, an LED chip 250a for supplying light to the light guide rod 210a, an LED chip 250b for supplying light to the light guide rod 210b, an LED chip 250c for supplying light to the light guide rod 210c, an LED chip 250d for supplying light to the light guide rod 210d, and an LED chip 250e for supplying light to the light guide rod 210e, are incorporated in the case 220.

The five light guide rods 210 include flanges 211. The first case member 221 and the second case member 222 together form five support portions including first engagement grooves 223 that respectively engage with the flanges 211 of the five light guide rods 210. The first engagement grooves 223 each correspond to the first engagement groove 123 of the glove inspection device 100. In a state where the flanges 211 are engaged with the first engagement grooves 223, the first case member 221 and the second case member 122 are fixed together with the screws 230, thereby stably fixing the five light guide rods 210 to the case 220.

The first case member 221 and the second case member 222 together form five support portions including second engagement grooves 224 that respectively engage with substrates of the five LED chips 250. The second engagement grooves 224 each correspond to the second engagement groove 124 of the glove inspection device 100. In a state where the substrates of the five LED chips 250 are respectively engaged with the second engagement groove 224, the first case member 221 and the second case member 222 are fixed together with the screws 230, thereby stably fixing the five LED chips 250 to the case 220.

### [Glove inspection method using glove inspection device 200]

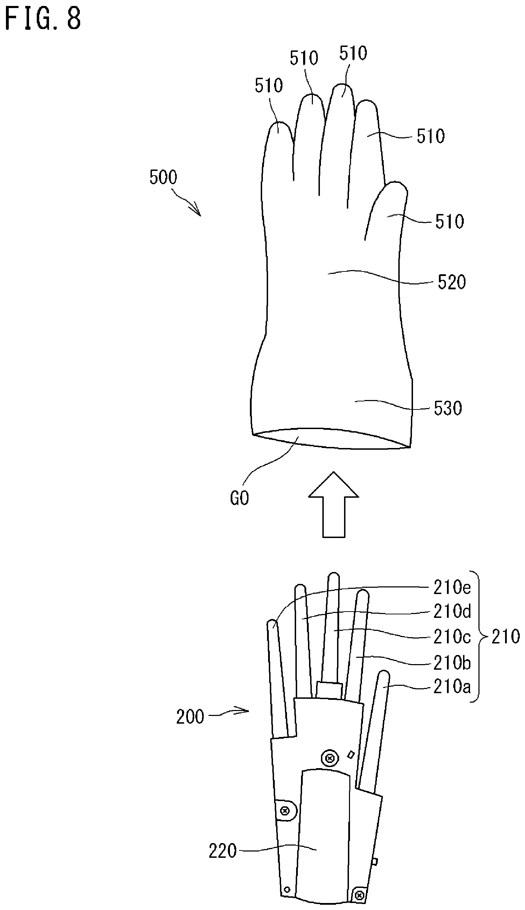

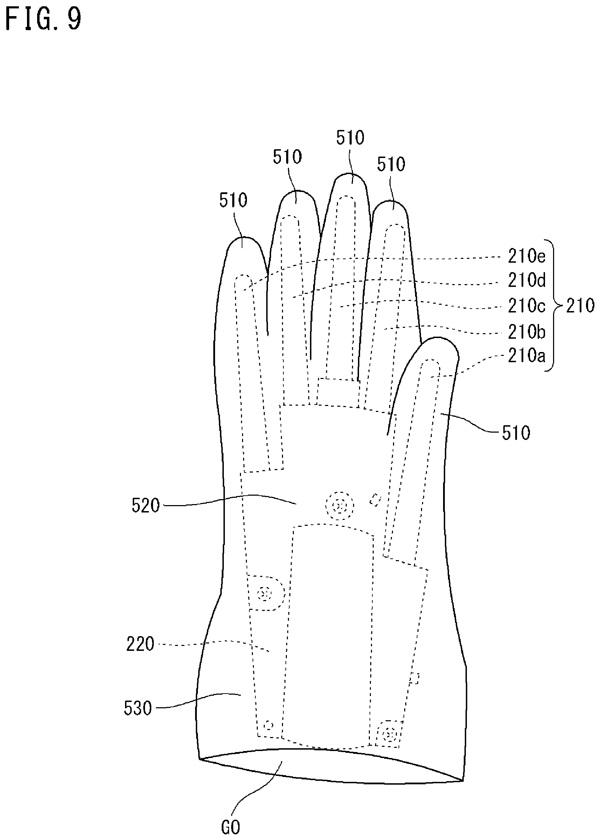

FIG. 8 is a diagram illustrating a state where the glove inspection device is inserted into the glove in a glove inspection method using the glove inspection device 200. FIG. 9 is a schematic view showing a state where the glove inspection device 200 has been inserted in the glove.

The glove inspection method using the glove inspection device 200 also includes a lighting step (step A), an insertion step (step B), and an inspection step (step C), as those of the glove inspection method using the glove inspection device 100. More specifically, the glove inspection method using the glove inspection device 200 includes
step A: a lighting step of activating the light sources of the glove inspection device 200,
step B: an insertion step of inserting the glove inspection device 200 into the glove 500, and
step C: an inspection step of inspecting the glove 500 for light leakage from any damaged areas thereof.

Hereinafter, in the glove inspection method using the glove inspection device 200, the descriptions of the same contents as in the glove inspection method using the glove inspection device 100 are omitted.

### (Step A and step B)

FIG. 8 shows that the switch 240 of the glove inspection device 200 is turned on to illuminate LED elements of the five LED chips 250, thereby causing the five light guide rods 210 to emit light (step A), and that the glove inspection device 200 equipped with the light-emitting five light guide rods 210 is inserted into the glove 500 through the glove opening GO (step B).

### (Step C)

As shown in FIG. 9, in the glove inspection method using the glove inspection device 200, the finger portions 510 of the glove 500 can be visually inspected in a state where all the five light guide rods 210 of the glove inspection device 200 are inserted in the corresponding five finger portions 510. That is, in a state where the light guide rod 210a has been inserted in the finger portion 510 corresponding to the thumb, the light guide rod 210b has been inserted in the finger portion 510 corresponding to the index finger, the light guide rod 210c has been inserted in the finger portion 510 corresponding to the middle finger, the light guide rod 210d has been inserted in the finger portion 510 corresponding to the ring finger, and the light guide rod 210e has been inserted in the finger portion 510 corresponding to the little finger, the finger portions 510 of the glove 500 can be visually inspected. Thus, the visual inspection of the finger portions 510 of the glove 500 in the glove inspection method using the glove inspection device 200 is different from the glove inspection method using the glove inspection device 100, and it is not necessary to reinsert the light guide rod into another finger portion 510. Therefore, the burden on the inspector during visual inspection is further reduced.

As shown in FIG. 9, the five light guide rods 210 have lengths such that, when respectively inserted into the five finger portions 510 of the glove 500, the five light guide rods 210 can pass the bases of the finger portions 510 of the glove 500 to positions corresponding to 70% or more of the longitudinal lengths of the finger portions 510. In addition, the case 220 is sized to be inserted into the palm portion 520 and the arm portion 530 of the glove 500.

### [Glove inspection unit 300]

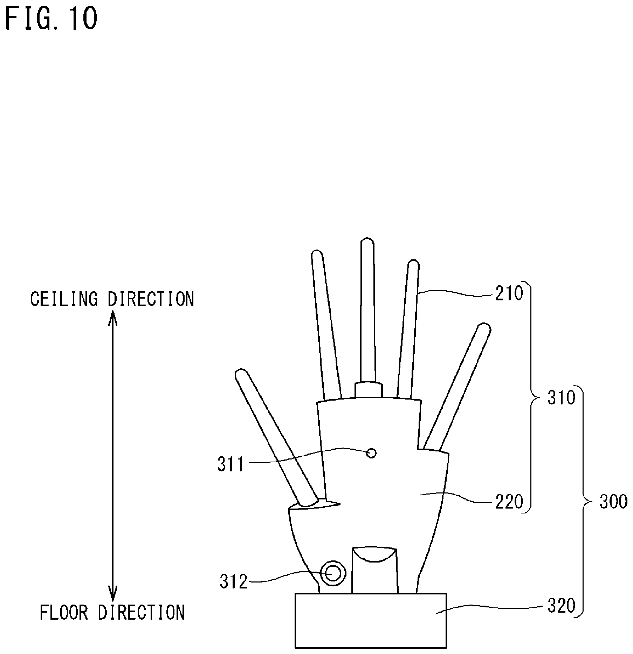

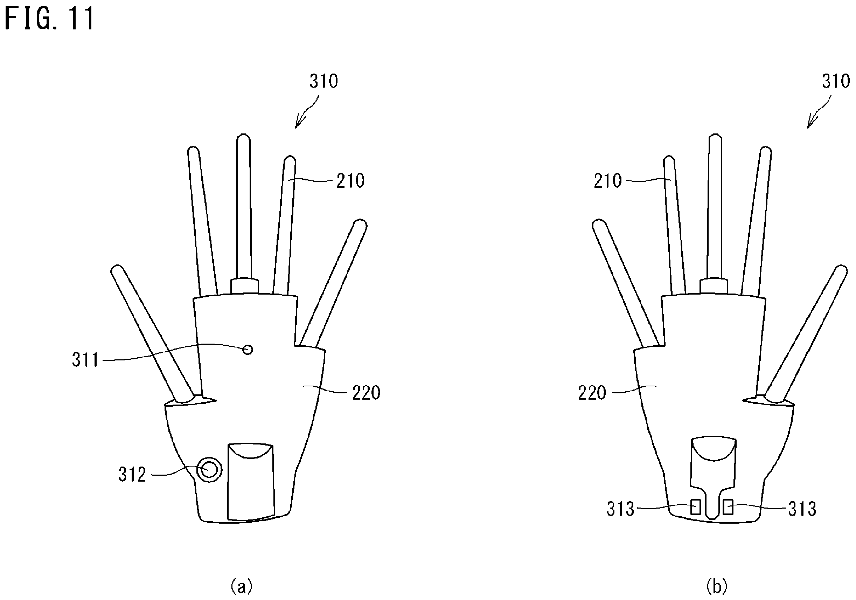

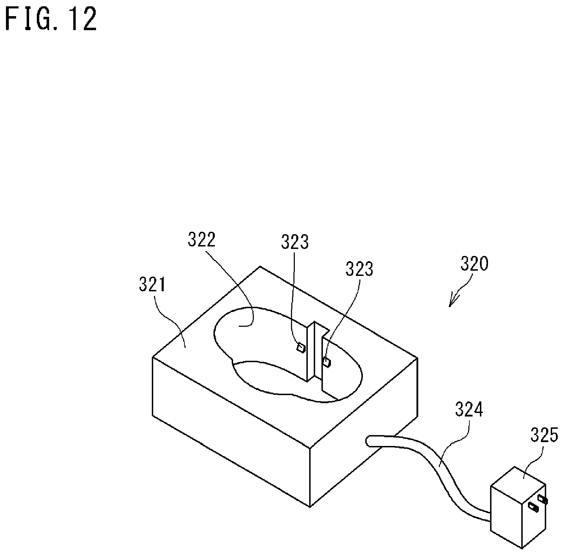

FIG. 10 is a schematic view of a glove inspection unit 300 according to a third embodiment of the present disclosure. FIG. 11 shows schematic views of a glove inspection device 310 shown in FIG. 10. FIG. 11(a) is a schematic view showing the front of the glove inspection device 310 in which a notification unit 311 and an input unit 312 are disposed in the case 220. FIG. 11(b) is a schematic view showing the rear of the glove inspection device 310. FIG. 12 is a schematic view of a charging device 320 shown in FIG. 10.

As shown in FIG. 10, the glove inspection unit 300 includes the glove inspection device 310 and the charging device 320. FIG. 10 is a schematic view of the glove inspection unit 300 and shows a state where the glove inspection device 310 has been inserted in an insertion port 322 of the charging device 320 shown in FIG. 12 (hereinafter, sometimes referred so as "inserted state"). The glove inspection device 310 has the same configuration as the above-described glove inspection device 200 including the five light guide rods 210. Thus, the descriptions of the components of the glove inspection device 310 that are the same as those of the glove inspection device 200 are omitted. In the glove inspection device 310 shown in FIG. 10 and FIG. 11, the same components as in the glove inspection device 200 are denoted by the same reference signs.

A double-headed arrow shown in FIG. 10 indicates the ceiling direction and the floor direction for the glove inspection unit 300 in the inserted state. As shown in FIG. 10, in the inserted state, the tips of the light guide rods 210 of the glove inspection device 310 face the ceiling direction. In other words, in the inserted state, the glove inspection device 310 is placed on the charging device 320 in an upright position, rather than lying down. This improves the visibility of the glove inspection device 310 in the inserted state. Thus, the inspector can easily recognize the location where the glove inspection device 310 in the inserted state is present. As a result, the inspector can smoothly start the visual inspection work.

As shown in FIG. 10 and FIG. 11, the glove inspection device 310 includes the notification unit 311, the input unit 312, and connection ports 313. The connection ports 313 are configured to receive electricity supplied through supply ports 323 of the charging device 320 described below. The electricity supplied through the supply ports 323 is supplied via the connection ports 313 to a battery incorporated in the case 220 of the glove inspection device 310. Thus, the glove inspection device 310 is charged.

In the glove inspection device 310, an LED lamp is used as the notification unit 311. The state of the glove inspection device 310 is visually notified to the inspector through the light emission pattern of the LED lamp serving as the notification unit 311. In the glove inspection device 310, a button is used as the input unit 312. Based on the manner of pressing the button serving as the input unit 312, the light emission from each light guide rod 210 is turned on or off, or the light emission mode of each light guide rod 210 is switched.

The light emission modes of each light guide rod 210 in the glove inspection device 310 include an illumination mode in which the light guide rod 210 is caused to continuously emit light and a blinking mode in which the light guide rod 210 is caused to intermittently emit light. The illumination mode and the blinking mode are implemented by controlling the LED chips 250 incorporated in the case 220 of the glove inspection device 310. A computer (not shown) serving as a control unit for controlling the LED chips 250 is incorporated in the case 220 of the glove inspection device 310. The manner of pressing the button serving as the input unit 312, serves as an instruction to the control unit, and causes the state of the glove inspection device 310 to be switched. As described below, the manner of pressing the button serving as the input unit 312 includes a long press and a short press.

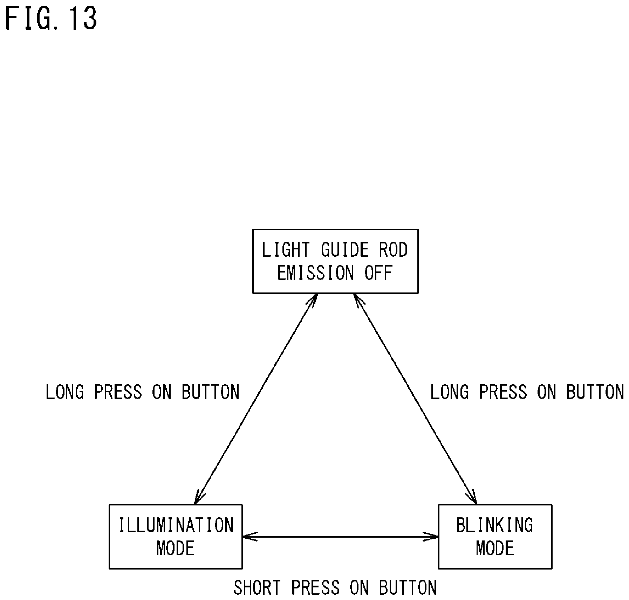

As shown in FIG. 13, the charging device 320 includes a body portion 321, a cable 324, and an adapter 325. The body portion 321 includes the insertion port 322 into which the glove inspection device 310 is inserted. The supply ports 323 for supplying electricity to the connection ports 313 of the glove inspection device 310 are provided in the insertion port 322. In the charging device 320, the body portion 321 and the cable 324, as well as the adapter 325 and the cable 324, are configured to be detachable. This allows the body portion 321, the cable 324, and the adapter 325 to be individually replaced. Thus, if a malfunction occurs in any of the body portion 321, the cable 324, or the adapter 325, the malfunction of the charging device 320 can be quickly resolved by replacing the failed component.

Table 1 is a table showing the relationship between the light emission pattern of the LED lamp serving as the notification unit 311, and the state of the glove inspection device 310.

**[Table 1]**

| Light emission pattern of LED lamp | State of glove inspection device |
|---|---|
| Lit green | Illumination mode |
| Blinking blue | Blinking mode |
| Lit red | Charging |
| Blinking red | Low battery state |

As shown in Table 1, the inspector can easily check visually whether the glove inspection device 310 is in the illumination mode, in the blinking mode, charging, or in the low battery state, by checking the color of the light emitted by the LED lamp serving as the notification unit 311 and whether the LED lamp is lit or blinking. This improves the efficiency of visual inspection work. Therefore, the burden on the inspector in visual inspection is further reduced.

FIG. 13 is a diagram illustrating an operation of the glove inspection device 310 via the input unit 312. In the glove inspection device 310, the state of the glove inspection device 310 can be switched through operation of the button serving as the input unit 312. The glove inspection device 310 has states that can be switched through the operation of the button and that include a state where the light emission of the light guide rod 210 is turned off, an illumination mode, and a blinking mode. The arrows and double-headed arrows shown in FIG. 13 indicate the directions of possible switching between the states of the glove inspection device 310. For example, "light guide rod emission off" and "illumination mode" are connected by a double-headed arrow. This indicates that the state where the light emission of the light guide rod 210 is turned off can be switched to the illumination mode and that the illumination mode can also be switched to the state where the light emission of the light guide rod 210 is turned off. Meanwhile, "light guide rod emission off" and "blinking mode" are connected by an arrow indicating a transition from "blinking mode" to "light guide rod emission off". This indicates that the blinking mode can be switched to the state where the light emission of the light guide rod 210 is turned off but the state where the light emission of the light guide rod 210 is turned off cannot be switched to the blinking mode.

As shown in FIG. 13, the state of the glove inspection device 310 can be switched based on the manner of pressing the button button serving as the input unit 312. In the operation of the glove inspection device 310, the manner of pressing the button serving as the input unit 312 includes a long press and a short press. Here, the long press in the operation of the glove inspection device 310 is defined as an operation in which the button remains pressed for 3 seconds or more. The short press in the operation of the glove inspection device 310 is defined as an operation in which the button is released in less than 3 seconds of being pressed. Based on the long and short press operations of the button, the control unit of the glove inspection device 310 controls the LED chips 250 incorporated in the case 220, thereby switching among the state where the light emission of the light guide rod 210 is turned off, the illumination mode, and the blinking mode.

The button serving as the input unit 312 is long-pressed when the glove inspection device 310 is in the state where the light emission of the light guide rod 210 is turned off, whereby the state of the glove inspection device 310 is switched to the illumination mode. In other words, upon powering on, the glove inspection device 310 first enters the illumination mode.

The button serving as the input unit 312 is short-pressed when the glove inspection device 310 is in the state of the illumination mode, whereby the state of the glove inspection device 310 is switched to the blinking mode. In addition, the button serving as the input unit 312 is short-pressed when the glove inspection device 310 is in the state of the blinking mode, whereby the state of the glove inspection device 310 is switched to the illumination mode. That is, in the glove inspection device 310, it is possible to switch between the illumination mode and the blinking mode by short-pressing the button serving as the input unit 312. Thus, the inspector can smoothly switch between the illumination mode and the blinking mode during visual inspection. It is possible to change the state of light emitted from the damaged area of the glove by switching between the illumination mode and the blinking mode during visual inspection. This allows the inspector to detect any damage to the glove more easily. Thus, the inspection accuracy of visual inspection is improved.

The button serving as the input unit 312 is long-pressed when the glove inspection device 310 is in the state of the illumination mode or the blinking mode, whereby the state of the glove inspection device 310 can be switched to the state where the light emission from the light guide rod 210 is turned off. That is, the inspector can turn off the power of the glove inspection device 310 by performing a long press operation on the button serving as the input unit 312 when the glove inspection device 310 is in either state, the illumination mode or the blinking mode. This allows the power of the glove inspection device 310 to be turned off smoothly after the visual inspection is completed.

### [Modifications]

Hereinafter, modifications of the embodiments will be described. In the modifications, the same components as in the above embodiments are denoted by the same reference signs, and the description thereof is omitted as appropriate.

In both the glove inspection method using the glove inspection device 100 and the glove inspection method using the glove inspection device 200, the glove 500, which is a rubber glove for an isolator, is inspected as a glove subject to inspection. However, the glove subject to inspection in the glove inspection method of the present invention is not limited thereto. The glove inspection method of the present invention can be applied to the inspection of various types of gloves, such as gloves that are used in restricted-access barrier systems including an isolator, a clean bench, or the like, and rubber gloves for surgical or household use.

In both the glove inspection method using the glove inspection device 100 and the glove inspection method using the glove inspection device 200, inspection for damage such as holes or tears has been described as the glove inspection. However, the glove inspection of the present invention is not limited thereto. The glove inspection method of the present invention can also be applied to quality inspection in glove production.

In both the glove inspection method using the glove inspection device 100 and the glove inspection method using the glove inspection device 200, the procedure in which the insertion step (step B) is performed after the lighting step (step A) has been described. However, the glove inspection method of the present invention is not limited thereto. The glove inspection method of the present invention also includes a procedure in which the lighting step (step A) is performed after the insertion step (step B).

In the glove inspection device 310, the LED lamp is used as the notification unit 311. However, the glove inspection device of the present invention is not limited thereto. For example, as the notification unit 311, a monitor or a speaker may be used. In a case where the monitor is used as the notification unit 311, the state of the glove inspection device can be visually notified to the inspector by means of text. In a case where the speaker is used as the notification unit 311, the state of the glove inspection device can be audibly notified to the inspector by means of sound.

In the glove inspection device 310, as the state of the glove inspection device 310 that is notified to the inspector by the notification unit 311, Table 1 shows illumination mode, blinking mode, charging, and low battery state. However, the glove inspection device of the present invention is not limited thereto. For example, as the state of the glove inspection device 310, charging completion may be added. In a case where charging completion is added as the state of the glove inspection device 310, the state of charging completion can also be notified to the inspector by lighting the LED lamp serving as the notification unit 311 in blue, for example.

### [Supplementary note]

At least parts of the above embodiments and the various modifications may be combined with each other as desired. The embodiments and the modifications disclosed herein are merely illustrative in all aspects and should not be recognized as being restrictive. The present invention is defined by the scope of the claims, and is intended to include meaning equivalent to the scope of the claims and all modifications within the scope.

### REFERENCE SIGNS LIST

100, 200, 310 glove inspection device
110, 210 light guide rod
110a first end portion
110b second end portion
111,211 flange
120, 220 case
121, 221 first case member
122, 222 second case member
123, 223 first engagement groove
124, 224 second engagement groove
130, 230 screw
140, 240 switch
150, 250 LED chip
151 LED element
152 substrate
300 glove inspection unit
311 notification unit
312 input unit
313 connection port
320 charging device
321 body portion
322 insertion port
323 supply port
324 cable
325 adapter
500 glove
510 finger portion
520 palm portion
530 arm portion
CLR center line
CO case opening
EXA inspector
GO glove opening
PH pinhole

## Claims

1. A glove inspection device comprising:
a light guide rod that can be inserted into a finger portion of a glove; and
a case provided with a support portion that supports a side, on which a first end portion of the light guide rod is located, opposite to an insertion direction of the light guide rod into the finger portion, and a light source configured to irradiate the first end portion.

2. The glove inspection device according to claim 1, wherein
the light guide rod includes a flange on the first end portion side, and
the support portion includes a first engagement groove that engages with the flange.

3. The glove inspection device according to claim 1 or 2, wherein
the light source is an LED chip including an LED element and a base board on which the LED element is mounted,
the case includes a second engagement groove that engages with the base board, and
the LED element is disposed near, but spaced from, the first end portion when the substrate is engaged.

4. The glove inspection device according to any one of claims 1 to 3, wherein
a second end portion of the light guide rod, which faces the insertion direction of the light guide rod into the finger portion, is formed in a convex curved shape.

5. The glove inspection device according to claim 4, wherein
the light guide rod has a length such that, when the light guide rod is inserted into the finger portion, the second end portion can pass a base of the finger portion of the glove to a position corresponding to 70% or more of a longitudinal length of the finger portion.

6. The glove inspection device according to any one of claims 1 to 4, wherein the light guide rod has a luminance of 1500 lux or more.

7. The glove inspection device according to any one of claims 1 to 6, wherein
the glove includes five said finger portions, and
the glove inspection device includes
five said light guide rods that can be respectively inserted into the five finger portions, and
a case provided with five support portions that support sides, on which first end portions of the five light guide rods are located, opposite to insertion directions of the five light guide rods into the finger portions, and five light sources configured to respectively irradiate the first end portions of the five light guide rods.

8. The glove inspection device according to any one of claims 1 to 7, wherein the glove is a glove that is applied to a restricted-access barrier system.

9. The glove inspection device according to claim 8, wherein the restricted-access barrier system is an isolator.

10. The glove inspection device according to any one of claims 1 to 9, wherein
the case includes
a control unit configured to control each light source and to switch the light emission mode of each light guide rod, and
an input unit configured to instruct the control unit to switch the light emission mode, and
the light emission mode includes
an illumination mode in which the light guide rod is caused to continuously emit light, and
a blinking mode in which the light guide rod is caused to intermittently emit light.

11. The glove inspection device according to claim 10, wherein the case includes a notification unit configured to notify the light emission mode of the glove inspection device.

12. A glove inspection unit comprising:
the glove inspection device according to any one of claims 1 to 11; and
a charging device configured to charge the glove inspection device.

13. The glove inspection unit according to claim 13, wherein
the case includes a notification unit configured to notify a charging state of the glove inspection device, and
the charging state includes
a state in which the glove inspection device is charging, and
a state in which a battery level of the glove inspection device is low.

14. The glove inspection unit according to claim 13 or 14, wherein
the charging device
includes an insertion port into which the case is inserted, and
is configured to support the glove inspection device such that, when the case is inserted into the insertion port, a second end portion of the light guide rod, which faces an insertion direction of the light guide rod into the finger portion, faces a ceiling direction.

15. A glove inspection method comprising:
a lighting step of activating a light source of the glove inspection device according to any one of claims 1 to 11, or the glove inspection device used in the glove inspection unit according to any one of claims 12 to 14;
an insertion step of inserting the glove inspection device into a glove; and
an inspection step of inspecting light leakage from any damaged areas of the glove.

16. The glove inspection method according to claim 15, wherein the inspection step includes stretching of an inspection target area of the glove by an inspector.
